# EUROPÄISCHE PATENTANMELDUNG

(11) **EP 3 766 809 A1**
(43) Veröffentlichungstag der Anmeldung: **20.01.2021**
(21) Anmeldenummer: 19186311.7
(22) Anmeldetag: 15.07.2019
(51) Int. Cl.: B65G 17/06, B65G 21/08, C21B 13/00, F27B 9/24

(54) **FÖRDERN EINES FÖRDERGUTS**

(71) Anmelder: Primetals Technologies Austria GmbH, 4031 Linz (AT)
(72) Erfinder: Rosenfellner, Gerald, 3355 Ertl (AT)
(74) Vertreter: Metals@Linz

(57) **Zusammenfassung**

Die Erfindung betrifft eine Förderanlage (1) zum Fördern eines Förderguts entlang eines Förderwegs. Die Förderanlage (1) umfasst eine Förderkammer (5), in der der Förderweg angeordnet ist. Außerhalb der Förderkammer (5) ist wenigstens eine Komponente einer Fördermechanik zur Förderung des Förderguts angeordnet. Die Fördermechanik weist einen Zugmitteltrieb mit wenigstens einem Zugmittel (48) auf, mit dem Trägerelemente (46) zur Förderung des Förderguts bewegbar sind. Die Trägerelemente (46) sind in der Förderkammer (5) angeordnet und ragen durch eine Durchlassöffnung (9) aus der Förderkammer (5) heraus. Die Oberflächen der Trägerelemente (46) sind innerhalb der Förderkammer (5) und/oder im Bereich der Durchlassöffnung (9) zumindest zum Teil mit einem Wärmeisolationsmaterial (47) versehen.

## Beschreibung

Die Erfindung betrifft eine Förderanlage.

Zum Bewegen heißer Materialien, insbesondere in der metallurgischen Industrie, werden Heißförderer verwendet.

Insbesondere betrifft die Erfindung das Fördern von reaktivem und/oder heißem und/oder abrasivem Fördergut. Unter einem reaktiven Fördergut wird hier ein Fördergut verstanden, das chemisch oder/und physikalisch mit die Förderanlage umgebenden Umgebungsstoffen, beispielsweise mit Luft, insbesondere mit dem Sauerstoff der Luft, reagiert. Bei dem Fördern derartigen Förderguts werden verschiedene Anforderungen an eine Förderanlage gestellt. Bei der Förderung heißen Förderguts wird auch die Fördermechanik der Förderanlage hohen Temperaturen ausgesetzt, so dass sie gekühlt werden oder aus teuren hitzebeständigen Materialien gefertigt sein muss. Bei der Förderung reaktiven Förderguts kann, beispielsweise durch chemische Reaktionen des Förderguts mit beispielsweise Sauerstoff aus der Umgebung, aus dem Fördergut gesundheitsschädliches und/oder umweltschädliches Gas entweichen, und/oder das Fördergut kann sich durch die Reaktionen stark erhitzen, was zu Materialschädigungen des Förderguts und/oder zu Sicherheitsproblemen führen kann. Um den Kontakt reaktiven Förderguts beispielsweise mit Sauerstoff zu vermeiden, wird oft ein Inertgas, beispielsweise Stickstoff, eingesetzt, um Sauerstoff aus der Umgebung des Förderguts fernzuhalten. Ferner entsteht bei der Förderung von Fördergut oft Staub, der ebenfalls gesundheitsschädlich und/oder umweltschädlich wirken und/oder schädlich für Teilkomponenten der Förderanlage sein kann, und abgezogen und entsorgt werden muss.

Der Erfindung liegt die Aufgabe zugrunde, eine verbesserte Förderanlage anzugeben.

Die Aufgabe wird erfindungsgemäß gelöst durch eine Förderanlage mit den Merkmalen des Anspruchs 1.

Vorteilhafte Ausgestaltungen der Erfindung sind Gegenstand der Unteransprüche.

Eine erfindungsgemäße Förderanlage zum Fördern eines Förderguts entlang eines Förderwegs weist eine Förderkammer auf, die vom Förderweg durchlaufen wird.

Zumindest außerhalb der Förderkammer ist wenigstens eine Komponente einer Fördermechanik zur Förderung des Förderguts angeordnet. Dies ermöglicht vorteilhaft, empfindliche Komponenten der Fördermechanik nicht in der Förderkammer, sondern außerhalb derselben anzuordnen und dadurch dem Einfluss von hohen Temperaturen, Staub und/oder korrosiven Gasen in der Förderkammer zu entziehen. Mit anderen Worten können Komponenten der Fördermechanik vor der oft widrigen Fluidatmosphäre in der Förderkammer durch Auslagerung aus dieser geschützt werden.

Die Fördermechanik weist einen Zugmitteltrieb mit wenigstens einem Zugmittel auf, mit dem Trägerelemente zur Förderung des Förderguts bewegbar sind. Das Fördergut wird beispielsweise direkt durch die Trägerelemente oder in an den Trägerelementen angeordneten Behältern transportiert. Die Trägerelemente sind in der Förderkammer angeordnet und ragen durch eine Durchlassöffnung aus dieser heraus. Zugmitteltriebe und damit bewegte Trägerelemente eignen sich unter anderem aufgrund ihrer Robustheit und ihres geringen Wartungsbedarfs besonders gut zum Transport von reaktivem, heißem und/oder abrasivem Fördergut. Die Anordnung eines Zugmittels außerhalb der Förderkammer, beispielsweise in einer Nebenkammer, schützt das Zugmittel vor hohen Temperaturen, Staub und/oder korrosiven Fluiden in der Förderkammer.

Unter dem Begriff Fördermechanik können alle Anlagenteile verstanden werden, die zur Übertragung von Förderenergie auf das Fördergut dienen. Dies kann auch einen gegebenenfalls verwendeten Behälter für das Fördergut einschließen.

Die Fördermechanik kann Antriebsräder aufweisen, die üblicherweise auf einer Welle sitzen. Für die Welle und Antriebsräder können Lagerungen und Schmierungen vorgesehen sein. Zum Antrieb können ferner mindestens ein Motor und mindestens ein Getriebe vorgesehen sein.

Trägerelemente können einstückig gebildet sein oder auch aus mehreren Elementen bestehen. Sie können aus nur einem Material gefertigt sein. Dies ist jedoch nicht notwendig.

Erfindungsgemäß sind Teile der Förderanlage zumindest innerhalb der Förderkammer und/oder im Bereich der Durchlassöffnung zumindest zum Teil mit einem Wärmeisolationsmaterial versehen. Als Wärmeisolationsmaterial eignen sich solche Materialien, die temperaturbeständig für Temperaturen oberhalb der Temperatur des Fördergutes sind. Insbesondere können dies einfach zu montierende Fasermatten sein.

In einer Ausführungsform ist eine Trennfläche zwischen einer Oberfläche der Förderkammer innerhalb der Förderkammer und zumindest einer angrenzenden äußeren Oberfläche der Förderkammer zumindest zum Teil mit dem Wärmeisolationsmaterial versehen.

In einer Ausführungsform sind die Oberflächen der Förderkammer zumindest teilweise zu einer Umgebung hin mit dem Wärmeisolationsmaterial versehen.

Sofern ein Gehäuse vorgesehen ist, ist die Isolierung des Gehäuses nicht zwingend notwendig, aber sinnvoll wegen:
(a) Berührschutz
(b) Minimierung der Gesamtverluste.

Mittels der erfindungsgemäßen Lösung erfolgt eine Verschiebung der maximalen Temperatur in Richtung der Wärmequelle oder anders ausgedrückt eine Isolierung entgegen den Wärmestrom innerhalb eines Bereichs.

Beispielsweise beginnt man bei der Durchlassöffnung der Trägerelemente und isoliert in Richtung der Behälter (Buckets). Dadurch wird der Wärmestrom am Eindringen in das Trägerelement gehindert.

Ebenso kann aber auch die Wärmequelle selbst isoliert werden. Die Eindringoberfläche für Wärme wird dabei kleiner. Wenn die gesamte Oberfläche des Trägerelements mit einer Isolierung versehen wird, verbleibt lediglich ein Verbindungsstutzen zum Behälter als Wärmeleiter. In diesem Fall kann beispielsweise für den Verbindungsstutzen ein Material mit einem niedrigen Wärmeleitkoeffizient gewählt werden und/oder es kann ein Wärmewiderstand an einer Verbindungsstelle vom Verbindungsstutzen zum Trägerelement oder vom Behälter zum Verbindungsstutzen und/oder eine Isolierung des Behälters vorgesehen sein.

Auch wenn die Förderkammer nach außen hin bereits isoliert ist, können Komponenten im Inneren der Förderkammer nochmals isoliert werden. Beispielsweise können in der Förderkammer die Trägerelemente (vorzugsweise komplett) und/oder die Behälter, sofern vorhanden, zumindest teilweise isoliert werden.

Bislang lag diese Vorgehensweise dem Fachmann fern, da auf einfache Weise die Außenisolierung verstärkt werden kann. Mit der vorgeschlagen Variante kann aber die Temperatur am Zugmittel, beispielsweise Ketten, wesentlich gesenkt werden. Dazu wird jedoch nicht das Zugmittel selbst wärmeisoliert (was sehr aufwändig wäre), sondern die Temperatursenkung am Zugmittel wird durch eine Wärmeisolierung anderer Teile, insbesondere der Trägerelemente und/oder Behälter erreicht. Da sich die Trägerelemente bewegen, wird auch ein Wärmefluss mit den Trägerelementen mitbewegt. Im Idealfall kann ein Trägerelement spaltfrei isoliert werden, im Unterschied beispielsweise zur Isolierung einer Wand der Förderkammer, die die wenigstens eine Durchlassöffnung aufweist.

Die Isolierung zur Umgebung ist zur Minimierung der Gefahr von Verbrennungen bei Berührung vorteilhaft.

In einer Ausführungsform sind Oberflächen der Trägerelemente zumindest innerhalb der Förderkammer und/oder im Bereich der Durchlassöffnung zumindest zum Teil mit einem Wärmeisolationsmaterial versehen. Alternativ oder zusätzlich ist an mindestens einem der Trägerelemente mindestens ein Behälter zur Aufnahme des Förderguts angeordnet, wobei eine Oberfläche und/oder Innenfläche des Behälters zumindest zum Teil mit einem Wärmeisolationsmaterial versehen ist.

Wenn heißes Fördergut transportiert werden soll, wird das Material der Trägerelemente der Förderanlage durch Wärmeleitung aus dem Fördergut erwärmt und leitet in weiterer Folge Wärme in die Zugmittel, die beispielsweise mindestens eine Kette umfassen können. Dadurch steigt die Temperatur am Zugmittel und/oder der Lager und/oder der Trägerelemente soweit, dass sehr teure Materialien für die Lager oder Zugmittel verwendet werden müssten. Bei Überschreiten bestimmter Temperaturen stehen hierfür keine geeigneten Materialien mehr zur Verfügung.

Durch das verwendete Wärmeisolationsmaterial auf Oberflächen der Trägerelemente innerhalb der Förderkammer und/oder im Bereich der Durchlassöffnung wird der Wärmeeintrag in die Trägerelemente aus heißem Fördergut reduziert, so dass auch die Wärmebelastung der Lager und Zugmittel verringert wird. Auf diese Weise wird die Ausfallsicherheit der Förderanlage verbessert.

In einer Ausführungsform können auch oder nur die Behälter zur Aufnahme des Fördergutes mit Wärmeisolationsmaterial versehen sein, um eine Wärmeisolation möglichst bis zur Wärmequelle, das heißt dem heißen Fördermaterial, zu erzielen. Auf diese Weise kann eine möglichst niedrige Temperatur der Trägerelemente bereits im Inneren der Förderkammer erreicht werden.

Werden jedoch nur die Behälter, nicht aber die Trägerelemente, mit Wärmeisolationsmaterial versehen, so wird innerhalb der Förderkammer zwar der Wärmeübergang vom Behälter in die Trägerelemente durch Wärmeleitung und Wärmestrahlung reduziert, nicht aber der Wärmeeintrag durch Konvektion aus den nach oben offenen Behältern.

Wenn die Wärmequelle nicht selbst isoliert wird, so wird durch die Wärmeisolation der thermisch gut leitenden Trägerelemente (beispielsweise Stahl oder Gusseisen) der Wärmeeintrag in die Trägerelemente bereits in der Förderkammer minimiert, insbesondere dann, wenn die Wärmeisolation der Trägerelemente innerhalb der Förderkammer nahezu vollständig ausgeführt ist.

Beispielsweise kann die gesamte Oberfläche der Trägerelemente innerhalb der Förderkammer und im Bereich der Durchlassöffnung mit dem Wärmeisolationsmaterial versehen sein, wodurch ein direkter Kontakt des Materials der Trägerelemente, das heißt des Trägerhauptkonstruktionsmaterials, mit der Atmosphäre der heißen Förderkammer vermieden wird. Die maximale Temperatur des Trägerhauptkonstruktionsmaterials befindet sich somit hinter einem Wärmeisolationsmaterial, wodurch die Eingangstemperatur für die Wärmeleitung im Trägerhauptkonstruktionsmaterial wesentlich gesenkt wird.

Da die Wärmeleitfähigkeit des Trägerhauptkonstruktionsmaterials hoch ist, wird durch Senkung der maximalen Temperatur des Trägerhauptkonstruktionsmaterials die Temperatur am Zugmittel, beispielsweise der Förderkette, unmittelbar gesenkt, beispielsweise um bis zu 150 °C. Eine Wärmeisolation an der von der Förderkette entfernten Stelle hat somit einen direkten Einfluss auf die Fördererkettentemperatur.

Ebenso kann die Oberfläche der Trägerelemente im Bereich der Durchlassöffnung und gegebenenfalls einem daran anschließenden Bereich innerhalb der Förderkammer mit dem Wärmeisolationsmaterial versehen sein, so dass nicht die gesamte Oberfläche der Trägerelemente innerhalb der Förderkammer mit dem Wärmeisolationsmaterial versehen ist.

In einer Ausführungsform ist wenigstens eine Nebenkammer vorgesehen, die durch die wenigstens eine Durchlassöffnung mit der Förderkammer verbunden ist, wobei die Trägerelemente durch die wenigstens eine Durchlassöffnung in die wenigstens eine Nebenkammer hineinragen und das Zugmittel in wenigstens einer der Nebenkammern angeordnet ist.

Die Anordnung von Komponenten der Fördermechanik in einer Nebenkammer erlaubt, diese Komponenten in der Nebenkammer relativ einfach zu kühlen, beispielsweise durch in die Nebenkammer geleitetes Fluid oder/und durch eine separate Kühlvorrichtung.

Bei einer Trennung der Förderkammer von einer Nebenkammer, in der wenigstens ein Zugmittel angeordnet ist, durch die Trägerelemente können die Trägerelemente neben dem Transport des Förderguts gleichzeitig zur Abschottung der Nebenkammer von der Förderkammer eingesetzt werden. Bei der Anordnung eines Zugmittels in einer seitlich an der Förderkammer angeordneten Nebenkammer wird das Zugmittel räumlich weiter von dem Fördergut getrennt, was insbesondere bei dem Transport heißen Förderguts vorteilhaft ist, da das Zugmittel in diesem Fall von dem Fördergut weniger stark erhitzt wird und somit auch weniger stark gekühlt werden muss.

Die Oberflächen der Nebenkammern können mit der Förderkammer nur mehr über wärmeisolierte Flächen verbunden sein, wodurch der Wärmeeintrag in die Atmosphäre der Nebenkammer klein gehalten werden kann.

In einer Ausführungsform sind Oberflächen der Trägerelemente außerhalb der Förderkammer nicht mit einem Wärmeisolationsmaterial versehen. Dies erleichtert die Abstrahlung von Wärme aus den Trägerelementen außerhalb der Förderkammer und kann somit den Wärmeeintrag in Zugmittel und Lager verringern.

Das Verhältnis der mit der Förderkammer gemeinsamen Kontaktfläche zur restlichen Oberfläche wird somit verringert.

Selbst bei nicht völlig isolierter Oberfläche des Trägerhauptkonstruktionsmaterials in der Förderkammer ergibt sich eine Erniedrigung der Temperatur im Bereich der Zugmittel, beispielsweise Ketten, Lager und Räder, da die Wärmeleistung durch die nicht isolierte Oberfläche wesentlich verringert wird.

Obwohl das Material der Trägerelemente selbst keine Isolierung in der Förderkammer erfordert, wird es trotzdem dort isoliert. Durch die Senkung der maximalen Temperatur im Material der Trägerelemente im Inneren wird der Wärmefluss in Richtung Nebenkammer gesenkt.

Durch die Vergrößerung der Isolationsfläche in die Förderkammer hinein wird die Wärmeleitung durch das Material der Trägerelemente vermindert, wodurch sich Vorteile ergeben:
a) wesentlich geringere Wärmeleitungsleistung durch das Material der Trägerelemente,
b) geringere Temperatur des Materials der Trägerelemente, wodurch kostengünstige Materialien für die hochbelasteten Trägerelemente verwendet werden können,
c) die mechanischen Eigenschaften der Materialien der Trägerelemente verbessern sich stark, da die Spitzentemperaturen sinken,
d) geringerer Wärmeeintrag in die Nebenkammer, wodurch die Materialtemperaturen aller Teile in der Nebenkammer sinken. Es können kostengünstige Materialien für die kostenintensiven Ketten bzw. Radlager verwendet werden,
e) Förderketten können höhere maximale Zugkräfte aufnehmen oder leichtere Fördererketten sind einsetzbar
f) im Falle eines Fördererausfalls ist keine Zwangskühlung notwendig,
g) Schmierung der Räderlager ist wesentlich einfacher, da die Lagertemperaturen niedrig sind,
h) wesentlich längere Lebensdauer wegen geringerer Betriebstemperatur.

In einer Ausführungsform sind die Oberflächen der Trägerelemente außerhalb der Förderkammer zumindest teilweise ebenfalls mit einem Wärmeisolationsmaterial versehen.

In einer Ausgestaltung der Erfindung weist die Nebenkammer eine sich von einer Fluidatmosphäre in der Förderkammer physikalisch und/oder chemisch unterscheidende Fluidatmosphäre auf. Die wenigstens eine Durchlassöffnung und die Fluidatmosphären in der Förderkammer und in der wenigstens einen Nebenkammer können zur Einstellung eines definierten Fluidstroms in dem Anlagengehäuse ausgebildet sein. Gegebenenfalls genügt es, die natürliche Bewegung des Fluidstroms (Naturzug) im Hinblick auf die Umgebungsbedingungen der Ketten und Räder günstig zu beeinflussen, beispielsweise durch Abhalten oder Minimieren von Staub, Absenken der Temperatur, Verbessern temperaturabhängiger Materialkennwerte, Abhalten von schädlichen Fluiden, beispielsweise Luft, etc.

Unter einer Fluidatmosphäre in einer Kammer werden die chemischen und physikalischen Eigenschaften, beispielsweise die chemische Zusammensetzung, der Druck oder die Temperatur, eines Fluids verstanden, das sich in der Kammer befindet. Unter einem Fluid wird ein Gas oder eine Flüssigkeit verstanden.

Die Förderanlage ermöglicht also einen definierten Fluidstrom in einem Anlagengehäuse der Förderanlage. Dies wird durch eine Aufteilung eines Anlagengehäuses in eine Förderkammer und wenigstens eine Nebenkammer erreicht, die voneinander verschiedene Fluidatmosphären aufweisen und durch wenigstens eine Durchlassöffnung verbunden sind. Die Anordnung des Förderwegs in einer Förderkammer ermöglicht eine weitgehende Kapselung des Förderwegs gegenüber der Umgebung, so dass das Fördergut gegenüber Umgebungsstoffen und insbesondere Sauerstoff aus der Umgebung weitgehend abgeschottet ist. Die Einstellung eines definierten Fluidstroms durch die voneinander verschiedenen Fluidatmosphären in der Förderkammer und der wenigstens einen Nebenkammer ermöglicht zusätzlich das Fernhalten von Umgebungsstoffen und insbesondere von Sauerstoff aus dem Bereich des Förderguts, sowie die definierte Ableitung von gesundheitsschädlichen und/oder umweltschädlichen Gasen und Staub mit dem Fluidstrom aus der Förderkammer.

Eine Ausgestaltung der Erfindung sieht vor, dass das Anlagengehäuse wenigstens einen Fluideinlass und wenigstens einen Fluidauslass aufweist und bis auf den wenigstens einen Fluideinlass und den wenigstens einen Fluidauslass fluiddicht oder annähernd fluiddicht ausgeführt ist. Unter Fluiddichtheit wird hier eine einer technischen Spezifikation genügende Fluiddichtheit verstanden. Durch diese weitgehend fluiddichte Ausführung des Anlagengehäuses wird ein Austreten von Fluid aus dem Anlagengehäuse auf die Fluidauslässe begrenzt, so dass eine nur relativ geringe Menge von Fluid aus dem Anlagengehäuse entweicht. Ferner ermöglicht der Austritt von Fluid durch die definierten Fluidauslässe, aus dem Anlagengehäuse austretendes Fluid gezielt wenigstens teilweise aufzufangen und dem Anlagengehäuse wieder zuzuführen. Dadurch werden der Verbrauch und die Kosten des eingesetzten Fluids vorteilhaft reduziert. Die weitgehend fluiddichte Ausführung des Anlagengehäuses reduziert außerdem vorteilhaft das Eindringen von die Förderanlage umgebenden Umgebungsstoffen in das Anlagengehäuse. Es genügt oft, wenn das Gehäuse nahezu fluiddicht ist. Komplette Gasdichtheit ist nicht immer erforderlich. Vielmehr können erlaubte Leckraten für den jeweiligen Anwendungsfall vorgegeben sein.

Eine weitere Ausgestaltung der Erfindung sieht vor, dass ein im Bereich eines Förderweganfangs des Förderwegs angeordnetes Förderkammerende der Förderkammer geschlossen oder verschließbar ist. Dadurch kann die Richtung des Fluidstroms in einfacher Weise der Transportrichtung des Förderguts angeglichen werden.

In einer Ausgestaltung der Erfindung trennen die Trägerelemente zumindest teilweise die Förderkammer von einer Nebenkammer, in der wenigstens ein Zugmittel angeordnet ist. Die Trägerelemente können dabei so breit ausgeführt sein, dass sie die Schlitzfläche entlang der Durchlassöffnung minimieren. Die Trägerelemente können im Bereich der Durchlassöffnung so breit als möglich sein ohne aufeinander zu stoßen. Im Bereich einer Umlenkung klappen die Trägerelemente auseinander.

Eine weitere Ausgestaltung der Erfindung sieht vor, dass eine Öffnungsweite wenigstens einer Durchlassöffnung entlang des Verlaufs der Durchlassöffnung variiert. Bereiche einer Nebenkammer mit schmaleren Durchlassöffnungen eignen sich besonders vorteilhaft zur Kühlung von dort angeordneten Komponenten der Fördermechanik mit in die Nebenkammer geleitetem Fluid, da sich in diesen Bereichen besonders hohe Fluidströme des Fluids ergeben. Ferner eignen sich Bereiche einer Nebenkammer mit schmaleren Durchlassöffnungen besonders vorteilhaft für die Einleitung von Fluid in die Nebenkammer, weil in diesen Bereichen weniger Fluid aus der Nebenkammern in die Förderkammer strömt als in Bereichen mit weiteren Durchlassöffnungen, so dass das eingeleitete Fluid über größere Bereiche der Nebenkammer verteilt werden kann. Bereiche mit weiteren Durchlassöffnungen eignen sich dagegen vorteilhaft, um gezielt größere Mengen von Fluid in die Förderkammer zu leiten und dadurch den Fluidstrom in der Förderkammer stärker zu beeinflussen. Daher können durch gezielte Variation der Öffnungsweite einer Durchlassöffnung geeignete Bereiche der Nebenkammer zur Kühlung von Komponenten der Fördermechanik oder von anderen Komponenten der Förderanlage, beispielsweise den oben genannten Trägerelementen, zur Positionierung von Fluideinlässen und zur Beeinflussung des Fluidstroms in dem Anlagengehäuse definiert werden.

Eine weitere Ausgestaltung der Erfindung sieht eine Kühlvorrichtung zur Kühlung wenigstens einer Nebenkammer vor. Dadurch können insbesondere in der Nebenkammer angeordnete Komponenten der Fördermechanik gekühlt werden, wenn eine Kühlung durch das Fluid nicht vorgesehen oder nicht ausreichend ist.

Eine weitere Ausgestaltung der Erfindung sieht eine Fluideinspeisung oder ein Fluidkreislaufsystem vor, welches wenigstens eine Nebenkammer umfasst und zur Leitung eines Fluids durch wenigstens eine Durchlassöffnung zwischen der Nebenkammer und der Förderkammer, beispielsweise aus der Nebenkammer in die Förderkammer oder umgekehrt, ausgebildet ist. Durch ein derartiges Fluidkreislaufsystem kann vorteilhaft der Verbrauch von Fluid weiter gesenkt werden, da aus einer Nebenkammer abgeführtes Fluid über das Fluidkreislaufsystem wieder einer Nebenkammer zugeführt wird, so dass dieses Fluid in dem Fluidkreislaufsystem verbleibt. Grundsätzlich ist ein komplettes Fluidkreislaufsystem nicht unbedingt notwendig. Es genügt in vielen Fällen, das Fluid einzuspeisen, mit dem die Druckverhältnisse, die sich auf Grund des Naturzugs einstellen, so beeinflusst werden können, dass sie den Anforderungen der mechanischen Teile bzw. des Förderguts gerecht werden.

Das Fluidkreislaufsystem kann wenigstens einen Wärmetauscher zur Kühlung eines einer Nebenkammer zugeführten Fluids aufweisen. Dadurch kann das durch den Wärmetauscher abgekühlte und danach in eine Nebenkammer geleitete Fluid vorteilhaft auch zur Kühlung von in der Nebenkammer angeordneten Komponenten der Fördermechanik eingesetzt werden.

Ferner kann die Förderanlage eine Fluidwiederverwertungseinheit zur Aufnahme von Fluid aus der Förderkammer und Rückspeisung von Fluid in die Förderkammer aufweisen, wobei die Rückspeisung von Fluid direkt oder/und über das Fluidkreislaufsystem erfolgen kann. Die Fluidwiederverwertungseinheit kann eine Fluidreinigungseinheit zur Reinigung des aus der Förderkammer aufgenommenen Fluids aufweisen. Dadurch kann aus der Förderkammer austretendes oder abgezogenes Fluid wenigstens teilweise aufgefangen und wieder verwertet werden, indem es in die Förderkammer rückgespeist wird. Der Fluidwiederverwertungseinheit braucht Fluid dabei nicht direkt aus Förderkammer zugeführt werden, sondern Fluid kann auch aus der Förderkammer in ein der Förderanlage nachgeschaltetes Aggregat, beispielsweise in einen Bunker, in den das Fördergut gefördert wird, abgegeben werden, und der Fluidwiederverwertungseinheit aus diesem Aggregat zugeführt werden. Dadurch kann der Verbrauch von Fluid weiter vorteilhaft gesenkt werden. Da aus der Förderkammer austretendes oder abgezogenes Fluid oft Staub und/oder aus dem Fördergut entwichenes Gas enthält, kann eine Fluidreinigungseinheit zur Reinigung des aus der Förderkammer aufgenommenen Fluids vorteilhaft sein.

Eine weitere Ausgestaltung der Erfindung sieht ein Regelungssystem zur Regelung eines Fluidstroms von wenigstens einer Nebenkammer in die Förderkammer in Abhängigkeit von einem Differenzdruck zwischen einem Druck in der Nebenkammer und einem Druck in der Förderkammer vor. Dadurch kann der Fluidstrom vorteilhaft erforderlichenfalls besonders genau eingestellt werden.

Bei einem erfindungsgemäßen Verfahren zum Betrieb einer erfindungsgemäßen Förderanlage wird in jeder Nebenkammer ein höherer Fluiddruck als in der Förderkammer eingestellt. Dadurch wird erreicht, dass Fluid aus jeder Nebenkammer in die Förderkammer strömt und nicht umgekehrt aus der Förderkammer in eine Nebenkammer. Der gegenüber der Förderkammer höhere Fluiddruck in jeder Nebenkammer und die daraus resultierende Fluidströmung aus jeder Nebenkammer in die Förderkammer verhindern vorteilhaft auch das Eindringen von aus dem Fördergut entwichenem Fluid und/oder von bei dem Transport des Förderguts entstehendem Staub in eine Nebenkammer.

Eine Ausgestaltung des Verfahrens sieht vor, dass Fluid aus der Förderkammer durch eine Fluidwiederverwertungseinheit direkt oder/und über wenigstens eine Nebenkammer in die Förderkammer rückgespeist wird. Dadurch kann der Verbrauch von Fluid vorteilhaft gesenkt werden. Insbesondere kann vorgesehen sein, dass Fluid in der Fluidwiederverwertungseinheit vor der Rückspeisung in die Förderkammer gereinigt wird. Dadurch kann vorteilhaft vermieden werden, dass mit dem rückgespeisten Fluid Staub und/oder aus dem Fördergut entwichenes Fluid in die Förderkammer gelangt.

In einer weiteren Ausführungsform ist kein Fluidkreislaufsystem vorgesehen. Dies wird durch die erfindungsgemäße Wärmeisolation der Trägerelemente ermöglicht. Durch den Verzicht auf den Kühlkreislauf können Kosten eingespart werden.

In einer weiteren Ausführungsform können Oberflächen der Trägerelemente sowohl auf deren Oberseite, die das heiße Fördergut oder die Behälter zur Aufnahme des heißen Fördergutes trägt, als auch auf deren Unterseite zumindest zum Teil mit dem Wärmeisolationsmaterial versehen sein, insbesondere dann, wenn auch die Unterseite ein heißer Bereich ist, der gegebenenfalls innerhalb der Förderkammer liegt.

In einer alternativen Ausführungsform kann auch eine Förderanlage ohne eine Förderkammer vorgesehen sein, wobei die Trägerelemente zumindest in einem Bereich, der einem Behälter zur Aufnahme des heißen Fördergutes benachbart ist, mit Wärmeisolationsmaterial versehen sind.

In einer alternativen Ausführungsform können in einer Förderanlage mit oder ohne Förderkammer die Trägerelemente vollständig oder nahezu vollständig mit einem Wärmeisolationsmaterial versehen sein. Dies verringert zwar den Wärmeeintrag aus dem heißen Fördergut in die Trägerelemente, behindert aber auch die Wärmeabstrahlung aus den Trägerelementen.

In einer alternativen Ausführungsform können in einer Förderanlage mit oder ohne Förderkammer die Trägerelemente so gebildet sein, dass das heiße Fördergut oder die zur Aufnahme des heißen Fördergutes bestimmten Behälter von einem mittleren Bereich des Trägerelements transportiert werden, der aus einem gut wärmeleitenden Trägermaterial, beispielsweise Stahl oder Gusseisen, besteht, wobei mit den Zugmitteln, Lagern und/oder Rädern verbundene Teile des Trägerelements vom mittleren Bereich durch aus wärmeisolierendem Material bestehende Zwischenteile des Trägerelements so getrennt sind, dass nur wenig Wärme aus dem mittleren Bereich in die Zugmittel, Lager und/oder Räder gelangt. Die auf diese Weise mehrteilig ausgebildeten Trägerelemente weisen mit den aus wärmeisolierendem Material bestehenden Zwischenteilen jedoch eine Schwächung auf, die anfälliger für mechanische Belastungen und zu dem teuer in der Herstellung ist.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
FIG 1 schematisch ein erstes Ausführungsbeispiel einer Förderanlage mit einem ersten Ausführungsbeispiel eines Fluidkreislaufsystems,
FIG 2 schematisch ein zweites Ausführungsbeispiel einer Förderanlage,
FIG 3 eine perspektivische Darstellung eines dritten Ausführungsbeispiels einer Förderanlage,
FIG 4 eine Schnittdarstellung der in Figur 3 dargestellten Förderanlage,
FIG 5 ein Blockdiagramm eines zweiten Ausführungsbeispiels eines Fluidkreislaufsystems einer Förderanlage,
FIG 6 ein Blockdiagramm eines dritten Ausführungsbeispiels eines Fluidkreislaufsystems einer Förderanlage,
FIG 7 ein Blockdiagramm eines vierten Ausführungsbeispiels eines Fluidkreislaufsystems einer Förderanlage,
FIG 8 ein Blockdiagramm eines fünften Ausführungsbeispiels eines Fluidkreislaufsystems einer Förderanlage,
FIG 9 eine Schnittdarstellung eines vierten Ausführungsbeispiels einer Förderanlage,
FIG 10 zeigt eine schematische Schnittansicht eines Ausführungsbeispiels einer Förderanlage mit Trägerelementen, die innerhalb einer Förderkammer und im Bereich einer Durchlassöffnung mit einem Wärmeisolationsmaterial versehen sind,
FIG 11 ein Profil einer Temperatur im Material des Trägerelements aus Figur 10 entlang einer Hauptachse des Trägerelements,
FIG 12 zeigt eine schematische Schnittansicht eines Ausführungsbeispiels einer Förderanlage mit Trägerelementen, die im Bereich einer Durchlassöffnung und daran angrenzend mit einem Wärmeisolationsmaterial versehen sind, und
FIG 13 ein Profil einer Temperatur im Material des Trägerelements aus Figur 12 entlang einer Hauptachse des Trägerelements.

Einander entsprechende Teile sind in allen Figuren mit den gleichen Bezugszeichen versehen.

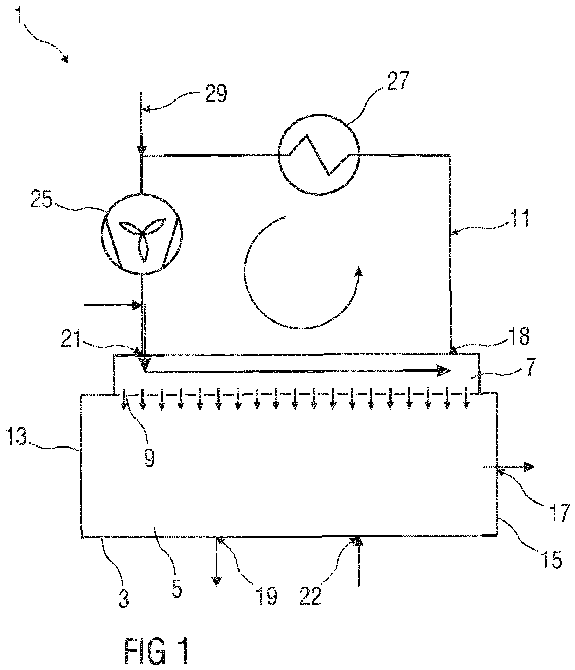

Figur 1 zeigt schematisch ein erstes Ausführungsbeispiel einer Förderanlage 1 zum Fördern eines Förderguts entlang eines Förderwegs. Die Förderanlage 1 umfasst ein Anlagengehäuse 3, das eine Förderkammer 5 und eine Nebenkammer 7 aufweist. In der Förderkammer 5 ist zumindest der Förderweg angeordnet. Die Nebenkammer 7 ist seitlich an der Förderkammer 5 angeordnet und ist durch mehrere Durchlassöffnungen 9 mit der Förderkammer 5 verbunden. Ferner weist die Förderanlage 1 ein Fluidkreislaufsystem 11 auf, welches die Nebenkammer 7 umfasst und zur Leitung eines Fluids, beispielsweise eines Inertgases, durch die Durchlassöffnungen 9 aus der Nebenkammer 7 in die Förderkammer 5 ausgebildet ist. Strömungsrichtungen des Fluids sind in Figur 1 durch Pfeile angedeutet. Statt mehrerer Durchlassöffnungen 9 kann auch eine durchgehende schlitzartige Durchlassöffnung 9 vorgesehen sein.

Das Fördergut ist beispielsweise ein reaktives und/oder heißes und/oder abrasives Fördergut. Insbesondere kann aus dem Fördergut gesundheitsschädliches und/oder umweltschädliches Fluid entweichen, das daher nicht unkontrolliert in die Umgebung entweichen soll. Ferner kann bei dem Transport des Förderguts in der Förderkammer 5 Staub entstehen.

Die Förderkammer 5 und die Nebenkammer 7 weisen sich physikalisch und/oder chemisch unterscheidende Fluidatmosphären auf. Insbesondere weist die Fluidatmosphäre in der Nebenkammer 7 einen höheren Fluiddruck als die Fluidatmosphäre in der Förderkammer 5 auf. Dadurch wird erreicht, dass Fluid durch die Durchlassöffnungen 9 aus der Nebenkammer 7 im Wesentlichen in die Förderkammer 5 strömt und nicht umgekehrt aus der Förderkammer 5 in die Nebenkammer 7. Die Fluidatmosphäre in der Förderkammer 5 kann insbesondere bei einem heißem Fördergut eine gegenüber der Fluidatmosphäre in der Nebenkammer 7 höhere Temperatur aufweisen und/oder aus dem Fördergut entwichenes Gas und/oder bei dem Transport des Förderguts entstehenden Staub enthalten. Der höhere Fluiddruck in der Nebenkammer 7 und die daraus resultierende Fluidströmung aus der Nebenkammer 7 in die Förderkammer 5 verhindern vorteilhaft auch das Eindringen dieses Gases und/oder Staubes aus der Förderkammer 5 in die Nebenkammer 7.

Der Förderweg verläuft in der Förderkammer 5 zwischen einem ersten Förderkammerende 13 und einem zweiten Förderkammerende 15. Im Bereich des ersten Förderkammerendes 13 wird Fördergut in die Förderkammer 5 eingebracht. An dem zweiten Förderkammerende 15 wird das Fördergut aus der Förderkammer 5 ausgegeben. Das erste Förderkammerende 13 ist beispielsweise geschlossen oder verschließbar ausgebildet, während das zweite Förderkammerende 15 einen ersten Fluidauslass 17 aufweist, durch den Fluid aus der Förderkammer 5 ausströmt, beispielsweise zusammen mit dem Fördergut. Das Anlagengehäuse 3 weist ferner einen zweiten Fluidauslass 18 auf, durch den in dem Fluidkreislaufsystem 11 zirkulierendes Fluid aus der Nebenkammer 7 abgeführt wird. Darüber hinaus kann das Anlagengehäuse 3 weitere Fluidauslässe 19 aufweisen, durch die Fluid aus der Förderkammer 5 abgezogen werden kann, beispielsweise wenn ein Fluiddruck in der Förderkammer 5 einen Druckschwellenwert überschreitet (derartige Fluidauslässe 19 können beispielsweise jeweils ein Sicherheitsorgan, beispielsweise ein Sicherheitsventil, aufweisen, beispielsweise wenn eine Sicherheitsstudie dies als notwendig erachtet). Das Anlagengehäuse 3 weist ferner einen ersten Fluideinlass 21 auf, durch den in dem Fluidkreislaufsystem 11 zirkulierendes Fluid in die Nebenkammer 7 eingespeist wird. Ferner kann das Anlagengehäuse 3 weitere Fluideinlässe 22 aufweisen, durch die der Förderkammer 5 Fluid zugeführt werden kann, beispielsweise um einen Fluidstrom in der Förderkammer 5 zu beeinflussen. Bis auf die Fluidauslässe 17 bis 19 und die Fluideinlässe 21, 22 ist das Anlagengehäuse 3 fluiddicht ausgeführt. Bei anderen Ausführungsbeispielen können der erste Fluideinlass 21 und/oder der zweite Fluidauslass 18 auch an anderen Stellen als an den in Figur 1 gezeigten Stellen der Nebenkammer 7 angeordnet, beispielsweise gegenüber Figur 1 miteinander vertauscht, sein.

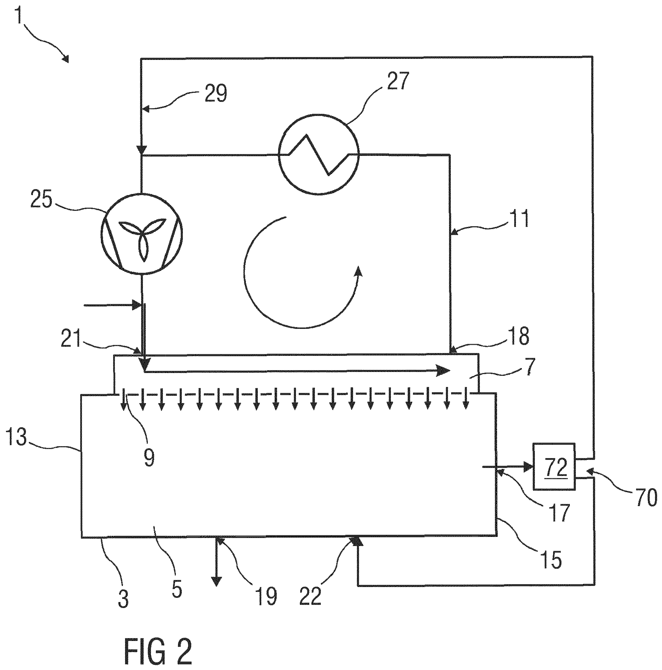

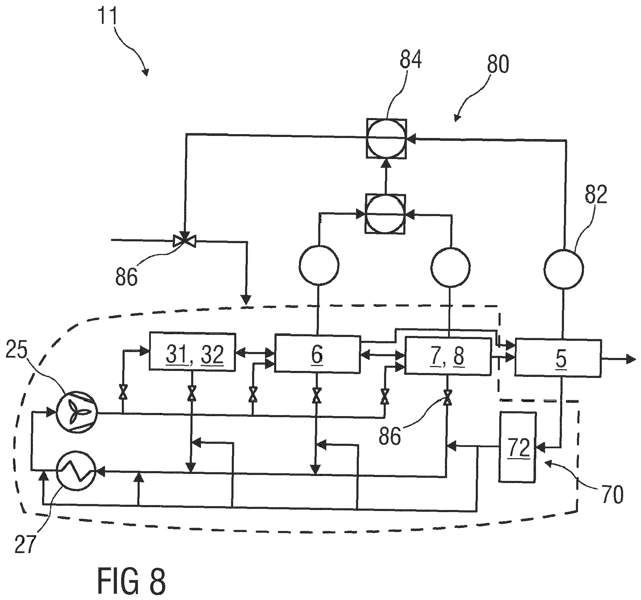

Durch diese weitgehend fluiddichte Ausführung des Anlagengehäuses 3 wird ein Austreten von Fluid aus dem Anlagengehäuse 3 auf die Fluidauslässe 17 bis 19 begrenzt, so dass eine nur relativ geringe Menge von Fluid aus dem Anlagengehäuse 3 entweicht. Ferner wird der Nebenkammer 7 aus dem zweiten Fluidauslass 18 abgeführtes Fluid durch das Fluidkreislaufsystem 11 über den ersten Fluideinlass 21 wieder zugeführt. Überdies kann aus dem ersten Fluidauslass 17 und/oder wenigstens einem weiteren Fluidauslass 19 austretendes Fluid gegebenenfalls wenigstens teilweise aufgefangen, dem Fluidkreislaufsystem 11 zugeführt (gegebenenfalls nach einer Reinigung, siehe dazu Figur 2 und Figur 8) und wiederverwertet werden. Insgesamt kann dadurch die dem Anlagengehäuse 3 zuzuführende Menge von Fluid relativ gering gehalten werden. Dadurch werden der Verbrauch von Fluid und die Kosten für das Fluid vorteilhaft reduziert.

Ein weiterer Vorteil der weitgehend fluiddichten Ausführung des Anlagengehäuses 3 und des gegenüber der Förderkammer 5 höheren Fluiddrucks in der Nebenkammer 7 ist, dass aus dem Fördergut entwichenes gesundheitsschädliches und/oder umweltschädliches Fluid ebenfalls nur an den Fluidauslässen 17, 19 aus der Förderkammer 5 austreten und dort entsorgt werden kann. Gleiches gilt für Staub, der sich in der Förderkammer 5 befindet.

In der Nebenkammer 7 sind beispielsweise Komponenten einer Fördermechanik zur Förderung des Förderguts angeordnet.

Das Fluidkreislaufsystem 11 führt Fluid durch die Nebenkammer 7 hindurch, durch den zweiten Fluidauslass 18 aus der Nebenkammer 7 heraus und, beispielsweise mittels Rohrleitungen, über eine Strömungsmaschine 25 und optional über einen Wärmetauscher 27 durch den ersten Fluideinlass 21 wieder in die Nebenkammer 7 hinein. Ferner weist das Fluidkreislaufsystem 11 eine Fluidzuführung 29 auf, durch die dem Fluidkreislaufsystem 11 Fluid zuführbar ist, insbesondere um Fluid zu ersetzen, das aus der Nebenkammer 7 durch die Durchlassöffnungen 9 in die Förderkammer 5 abgegeben wird. Die Strömungsmaschine 25 ist ein Gebläse oder eine Pumpe, je nachdem, ob das Fluid ein Gas oder eine Flüssigkeit ist. Der optionale Wärmetauscher 27 dient der Kühlung des Fluids. Er ist besonders in Fällen vorteilhaft, in denen in der Förderkammer 5 ein heißes Fördergut transportiert wird und in der Nebenkammer 7 zu kühlende Komponenten einer Fördermechanik zur Förderung des Förderguts angeordnet sind. In diesen Fällen kann das in die Nebenkammer 7 geleitete und durch den Wärmetauscher 27 abgekühlte Fluid vorteilhaft auch zur Kühlung der in der Nebenkammer 7 angeordneten Komponenten der Fördermechanik eingesetzt werden. Alternativ oder zusätzlich kann die Förderanlage eine (nicht dargestellte) separate Kühlvorrichtung zur Kühlung der Nebenkammer 7 aufweisen. Beispielsweise kann die Kühlvorrichtung ein mit einem Kühlmittel befüllbares Kühlrohr oder mehrere Kühlrohre aufweisen, wobei sich wenigstens ein Kühlrohr innerhalb der Nebenkammer 7 befinden kann.

Figur 2 zeigt schematisch ein zweites Ausführungsbeispiel einer Förderanlage 1. Die Förderanlage 1 unterscheidet sich von dem in Figur 1 dargestellten Ausführungsbeispiel im Wesentlichen durch eine Fluidwiederverwertungseinheit 70 zur Aufnahme von durch den Fluidauslass 17 aus der Förderkammer 5 austretendem Fluid. Die Fluidwiederverwertungseinheit 70 weist eine Fluidreinigungseinheit 72 zur Reinigung des aus der Förderkammer 5 aufgenommenen Fluids auf. Ein Teil des gereinigten Fluids wird über einen Fluideinlass 22 direkt in die Förderkammer 5 rückgespeist. Der andere Teil des gereinigten Fluids wird indirekt in die Förderkammer 5 rückgespeist, indem er dem Fluidkreislaufsystem 11 über die Fluidzuführung 29 zugeführt wird. Im Idealfall wird sämtliches aus der Förderkammer 5 austretendes Fluid in die Förderkammer 5 rückgespeist, so dass keine weitere Einspeisung von Fluid in die Förderanlage 1 erforderlich ist.

Abwandlungen des in Figur 2 gezeigten Ausführungsbeispiels können vorsehen, dass die Fluidwiederverwertungseinheit 70 alternativ oder zusätzlich aus einem anderen Fluidauslass 19 aus der Förderkammer 5 austretendes Fluid aufnimmt. Ferner kann vorgesehen sein, dass Fluid alternativ oder zusätzlich durch den Fluidauslass 17 direkt in die Förderkammer 5 rückgespeist wird. Weitere Abwandlungen des in Figur 2 gezeigten Ausführungsbeispiels können vorsehen, dass Fluid entweder nur indirekt über das Fluidkreislaufsystem 11 oder nur direkt in die Förderkammer 5 rückgespeist wird. Ferner kann Fluid statt über die Fluidzuführung 29 an einer anderen Stelle dem Fluidkreislaufsystem 11 zugeführt werden, beispielsweise vor dem Wärmetauscher 27, um das Fluid abzukühlen. Des Weiteren kann die Fluidreinigungseinheit 72 entfallen, wenn eine Reinigung des Fluids nicht erforderlich ist.

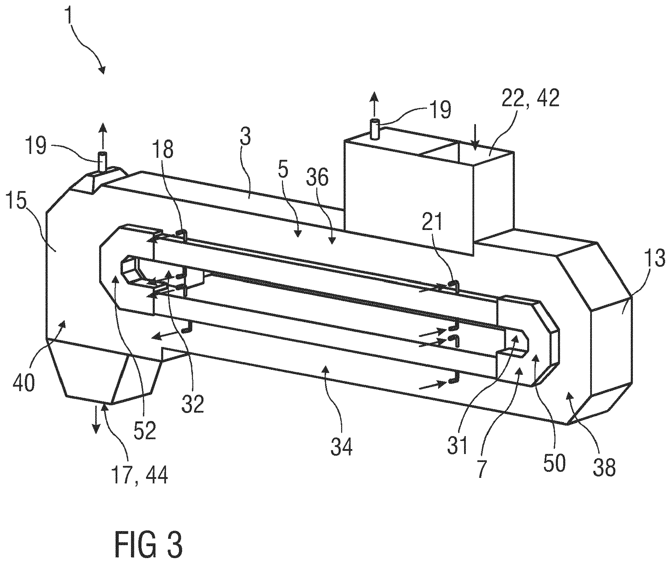

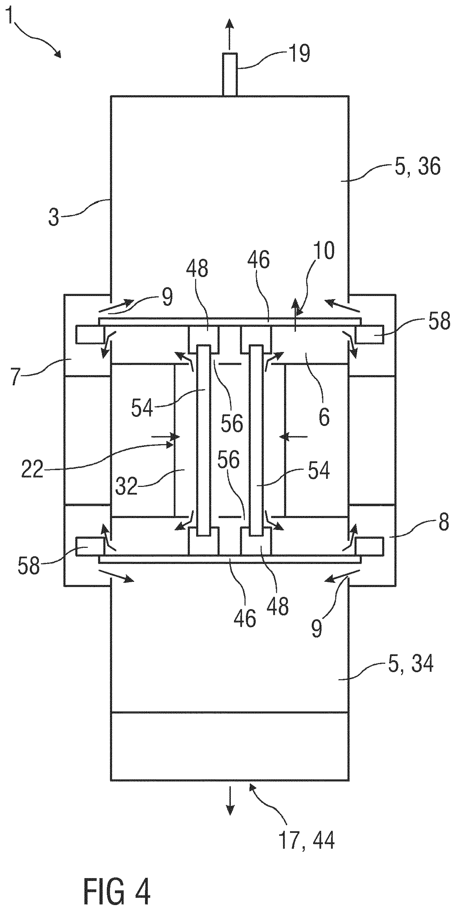

Die Figuren 3 und 4 zeigen ein drittes Ausführungsbeispiel einer Förderanlage 1 zum Fördern eines Förderguts entlang eines Förderwegs. Figur 3 zeigt eine perspektivische Ansicht der Förderanlage 1. Figur 4 zeigt eine Schnittdarstellung der Förderanlage 1.

Die Förderanlage 1 umfasst ein Anlagengehäuse 3, das eine Förderkammer 5, drei Nebenkammern 6 bis 8 und zwei Zusatzkammern 31, 32 aufweist.

Die Förderkammer 5 ist ringförmig mit zwei horizontal verlaufenden Horizontalabschnitten 34, 36 und zwei vertikal verlaufenden Umlenkabschnitten 38, 40 ausgebildet. Ein unterer Horizontalabschnitt 34 verläuft unterhalb eines oberen Horizontalabschnitts 36 und von diesem beabstandet. Die Umlenkabschnitte 38, 40 bilden sich gegenüber liegende Förderkammerenden 13, 15 der Förderkammer 5 und verbinden die beiden Horizontalabschnitte 34, 36 jeweils miteinander. Der Förderweg verläuft in dem oberen Horizontalabschnitt 36 der Förderkammer 5 zwischen einem von einem ersten Umlenkabschnitt 38 gebildeten ersten Förderkammerende 13 und einem von einem zweiten Umlenkabschnitt 40 gebildeten zweiten Förderkammerende 15. In der Nähe des ersten Förderkammerendes 13 weist das Anlagengehäuse 3 einen oberhalb des oberen Horizontalabschnitts 36 angeordneten Chargiereinlass 42 auf, durch den Fördergut in die Förderkammer 5 eingebracht wird. Im Bereich des zweiten Förderkammerendes 15 weist das Anlagengehäuse 3 eine unterhalb des zweiten Umlenkabschnitts 40 angeordnete Abwurföffnung 44 auf, durch die Fördergut aus der Förderkammer 5 ausgegeben wird.

Die Nebenkammern 6 bis 8 sind jeweils ebenfalls ringförmig ausgebildet. Die Förderkammer 5 verläuft um eine erste Nebenkammer 6 herum, wobei eine Unterseite des oberen Horizontalabschnitts 36, eine Oberseite des unteren Horizontalabschnitts 34 und die beiden Umlenkabschnitte 38, 40 der Förderkammer 5 an die erste Nebenkammer 6 grenzen. Eine zweite Nebenkammer 7 und die dritte Nebenkammer 8 sind an verschiedenen Seiten der ersten Nebenkammer 6 angeordnet und grenzen jeweils an eine Außenseite der ersten Nebenkammer 6 entlang deren gesamten ringförmigen Verlaufs.

Die Förderkammer 5 und die erste Nebenkammer 6 sind voneinander durch Trägerelemente 46 getrennt, mit denen das Fördergut transportiert wird. Das Fördergut wird beispielsweise direkt durch die Trägerelemente 46 oder in an den Trägerelementen 46 angeordneten Behältern transportiert. Die Trägerelemente 46 sind beispielsweise als Trägerplatten ausgeführt. In der ersten Nebenkammer 6 sind Zugmittel 48 angeordnet, die jeweils innerhalb der ersten Nebenkammer 6 entlang deren ringförmigen Verlaufs umlaufen und mit den Trägerelementen 46 verbunden sind. Die Zugmittel 48 sind beispielsweise als Antriebsketten ausgebildet. Mit den Zugmitteln 48 sind die Trägerelemente 46 entlang eines geschlossenen Wegs, der den Förderweg umfasst, in dem Anlagengehäuse 3 bewegbar. Jedes Zugmittel 48 verläuft unterhalb des oberen Horizontalabschnitts 36 und oberhalb des unteren Horizontalabschnitts 34 der Förderkammer 5 geradlinig zwischen zwei Umlenkbereichen 50, 52, die sich jeweils im Bereich eines Förderkammerendes 13, 15 befinden und in denen das Zugmittel 48 umgelenkt wird.

Die Zugmittel 48 werden jeweils über zwei Antriebsräder 54 angetrieben, die jeweils in einem Umlenkbereich 50, 52 der Zugmittel 48 angeordnet sind. Die Zugmittel 48 und Antriebsräder 54 bilden einen Zugmitteltrieb, mit dem die Trägerelemente 46 bewegt werden. An jedem Umlenkbereich 50, 52 ist eine der beiden Zusatzkammern 31, 32 angeordnet, in der die Antriebsräder 54 dieses Umlenkbereichs 50, 52 angeordnet sind. Jede Zusatzkammer 31, 32 grenzt an die erste Nebenkammer 6 und weist für jedes der in ihr angeordneten Antriebsräder 54 Verbindungsöffnungen 56 zu der ersten Nebenkammer 6 auf, durch die das Antriebsrad 54 in die erste Nebenkammer 6 hineinragt.

Die zweite Nebenkammer 7 und die dritte Nebenkammer 8 sind jeweils durch eine beispielsweise ringförmig umlaufende, schlitzartige Durchlassöffnung 9 mit der Förderkammer 5 und mit der ersten Nebenkammer 6 verbunden. Durch diese Durchlassöffnungen 9 ragen die Trägerelemente 46 in die zweite Nebenkammer 7 und in die dritte Nebenkammer 8 hinein. In der zweiten Nebenkammer 7 und in der dritten Nebenkammer 8 sind jeweils Führungsräder 58 angeordnet, mit denen die Trägerelemente 46 geführt werden. Wenigstens eine Nebenkammer 6 bis 8 kann ferner zusätzlich durch wenigstens eine weitere Durchlassöffnung 10 mit der Förderkammer 5 verbunden sein. Beispielsweise können weitere Durchlassöffnungen 10 zwischen der ersten Nebenkammer 6 und der Förderkammer 5 durch Spalte zwischen den Trägerelementen 46 realisiert sein.

Analog zu dem in Figur 1 dargestellten ersten Ausführungsbeispiel weist das Anlagengehäuse 3 Fluidauslässe 17 bis 19 und Fluideinlässe 21, 22 auf. Ein erster Fluidauslass 17 fällt beispielsweise mit der Abwurföffnung 44 zusammen. Ferner können die zweite Nebenkammer 7 und/oder die dritte Nebenkammer 8 wenigstens einen zweiten Fluidauslass 18 aufweisen, und/oder die Förderkammer 5 kann wenigstens einen weiteren Fluidauslass 19 aufweisen. Ferner können die zweite Nebenkammer 7 und/oder die dritte Nebenkammer 8 wenigstens einen ersten Fluideinlass 21 aufweisen, und/oder die Förderkammer 5 und/oder die erste Nebenkammer 6 und/oder wenigstens eine Zusatzkammer 31, 32 können wenigstens einen weiteren Fluideinlass 22 aufweisen, wobei beispielsweise der Chargiereinlass 42 ein Fluideinlass 22 sein kann.

Wie in dem in Figur 1 dargestellten ersten Ausführungsbeispiel ist das Anlagengehäuse 3 bis auf die Fluidauslässe 17 bis 19 und die Fluideinlässe 21, 22 fluiddicht ausgeführt, wodurch die bereits oben beschriebenen Vorteile hinsichtlich eines reduzierten Bedarfs an Fluidmenge und eines kontrollierten Abführens und Entsorgens von Gas und Staub aus der Förderkammer 5 resultieren.

Ferner weisen die Förderkammer 5 und die Nebenkammern 6 bis 8 wie in dem in Figur 1 dargestellten ersten Ausführungsbeispiel sich physikalisch und/oder chemisch unterscheidende Fluidatmosphären auf. Insbesondere weisen die Fluidatmosphären in jeder mit der Förderkammer 5 durch wenigstens eine Durchlassöffnung 9, 10 verbundenen Nebenkammer 6 bis 8 einen höheren Fluiddruck als die Fluidatmosphäre in der Förderkammer 5 auf. Dadurch wird erreicht, dass Fluid, Staub und aus dem Fördergut entwichenes Gas nicht unmittelbar aus der Förderkammer 5 in die Nebenkammern 6 bis 8 strömen und in der Förderkammer 5 kontrolliert zu den Fluidauslässen 17 bis 19 strömen. Ferner können die in den Nebenkammern 6 bis 8 angeordneten Komponenten der Fördermechanik, insbesondere die Zugmittel 48 und Antriebsräder 54, durch in die Nebenkammern 6 bis 8 geleitetes Fluid gekühlt werden. Die Öffnungsweiten der Durchlassöffnungen 9, 10 können entlang der Verläufe der Durchlassöffnungen 9, 10 variieren. Beispielsweise können die schlitzartigen Durchlassöffnungen 9 in den Umlenkbereichen 50, 52 der Zugmittel 48 weiter sein als zwischen den Umlenkbereichen 50, 52. Bereiche der Nebenkammern 6 bis 8 mit schmaleren Durchlassöffnungen 9, 10 eignen sich besonders vorteilhaft zur Kühlung von dort in den Nebenkammern 6 bis 8 angeordneten Komponenten der Fördermechanik wie der Zugmittel 48 und Antriebsräder 54 mit Fluid, da sich in diesen Bereichen besonders hohe Fluidströme des Fluids ergeben. Ferner eignen sich Bereiche der Nebenkammern 6 bis 8 mit schmaleren Durchlassöffnungen 9, 10 besonders vorteilhaft für die Einleitung von Fluid in die Nebenkammern 6 bis 8, weil in diesen Bereichen weniger Fluid aus den Nebenkammern 6 bis 8 in die Förderkammer 5 strömt als in Bereichen mit weiteren Durchlassöffnungen 9, 10, so dass das eingeleitete Fluid über größere Bereiche der Nebenkammern 6 bis 8 verteilt werden kann.

Analog zu dem in Figur 1 dargestellten ersten Ausführungsbeispiel kann auch das in den Figuren 3 und 4 gezeigte Ausführungsbeispiel ein Fluidkreislaufsystem 11 aufweisen, um den Fluidstrom zu steuern und zu optimieren. Die Figuren 4 bis 7 zeigen Blockdiagramme verschiedener Ausführungsformen derartiger Fluidkreislaufsysteme 11.

Das in den Figuren 3 und 4 dargestellte Ausführungsbeispiel einer Förderanlage 1 kann in verschiedener Weise abgewandelt werden. Beispielsweise können Zugmittel 48 unterhalb, oberhalb und/oder seitlich der Förderkammer 5 angeordnet sein oder/und es kann eine andere Anzahl von Zugmitteln 48 vorgesehen sein, beispielsweise nur ein Zugmittel 48. Ferner können separate Zusatzkammern 31, 32 für die Antriebsräder 54 entfallen. Des Weiteren kann der Förderweg statt horizontal auch unter einem Winkel zur Horizontalen verlaufen oder einen von einem geraden Verlauf abweichenden Verlauf, beispielsweise einen S- oder Z-förmigen Verlauf, aufweisen, wobei das Anlagengehäuse 3 dem Verlauf des Förderwegs entsprechend ausgeführt ist. Ferner kann der Fluidauslass 17 auch als ein (weiterer) Fluideinlass betrieben werden.

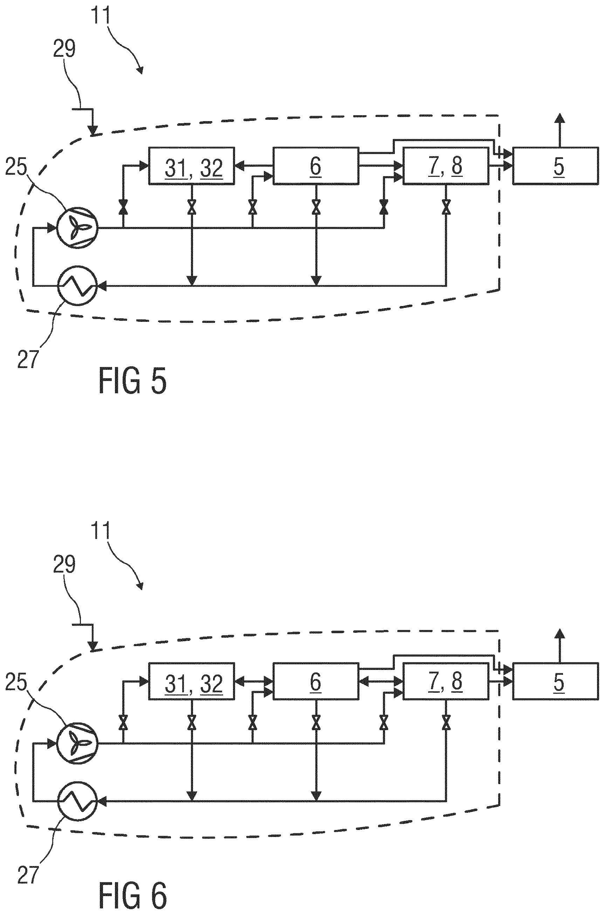

Figur 5 zeigt ein Fluidkreislaufsystem 11, in das die Nebenkammern 6 bis 8 und die Zusatzkammern 31, 32 integriert sind. Das Fluidkreislaufsystem 11 leitet Fluid durch jede Nebenkammer 6 bis 8 und jede Zusatzkammer 31, 32 hindurch, führt Fluid aus den Nebenkammern 6 bis 8 und den Zusatzkammern 31, 32 ab und leitet es über eine Strömungsmaschine 25 und optional über einen Wärmetauscher 27 den Nebenkammern 6 bis 8 und/oder den Zusatzkammern 31, 32 wieder zu. Aus den Nebenkammern 6 bis 8 wird ferner Fluid durch die Durchlassöffnungen 9, 10 in die Förderkammer 5 geleitet. Das Fluidkreislaufsystem 11 weist eine Fluidzuführung 29 auf, durch die dem Fluidkreislaufsystem 11 Fluid zuführbar ist, insbesondere um Fluid zu ersetzen, das aus den Nebenkammer 6 bis 8 durch die Durchlassöffnungen 9, 10 in die Förderkammer 5 abgegeben wird. Die erste Nebenkammer 6 weist einen höheren Fluiddruck als die anderen Nebenkammern 7, 8, die Zusatzkammern 31, 32 und die Förderkammer 5 auf, so dass Fluid aus der ersten Nebenkammer 6 in die anderen Nebenkammern 7, 8, die Zusatzkammern 31, 32 und die Förderkammer 5 strömt. Ferner weisen die zweite Nebenkammer 7 und die dritte Nebenkammer 8 einen höheren Fluiddruck als die Förderkammer 5 auf, so dass Fluid aus der zweiten Nebenkammer 7 und der dritten Nebenkammer 8 in die Förderkammer 5 strömt.

Figur 6 zeigt ein Fluidkreislaufsystem 11, das sich von dem in Figur 5 gezeigten Fluidkreislaufsystem 11 lediglich dadurch unterscheidet, dass die Nebenkammern 6 bis 8 und die Zusatzkammern 31, 32 einen gleichen Fluiddruck aufweisen, so dass zwischen den Nebenkammern 6 bis 8 und den Zusatzkammern 31, 32 Fluid ausgetauscht wird. Der Fluiddruck in den Nebenkammern 6 bis 8 ist wiederum höher als in der Förderkammer 5, so dass so dass Fluid aus jeder Nebenkammer 6 bis 8 in die Förderkammer 5 strömt.

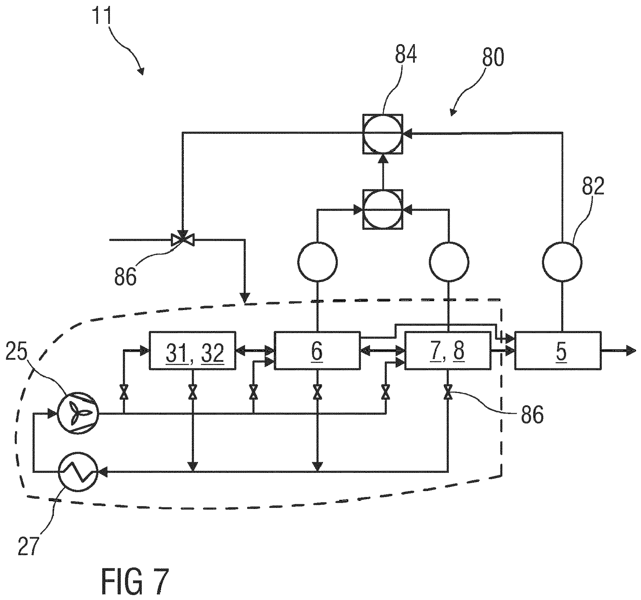

Figur 7 zeigt ein Fluidkreislaufsystem 11, das sich von dem in Figur 6 gezeigten Fluidkreislaufsystem 11 lediglich durch ein Regelungssystem 80 zur Regelung von Fluidströmen zwischen den Nebenkammern 6 bis 8 und der Förderkammer 5 unterscheidet. Das Regelungssystem 80 umfasst Druckmessvorrichtungen 82 zum Erfassen von Drücken in den Nebenkammern 6 bis 8 und der Förderkammer 5 sowie Steuereinheiten 84 zur Überwachung von Differenzdrücken zwischen diesen Drücken und zur Regelung der Fluidströme zwischen den Nebenkammern 6 bis 8 und der Förderkammer 5 in Abhängigkeit von den Differenzdrücken. Die Regelung der Fluidströme erfolgt mittels einer Ansteuerung von Steuerventilen 86 des Fluidkreislaufsystems 11.

Figur 8 zeigt ein Fluidkreislaufsystem 11, das sich von dem in Figur 7 gezeigten Fluidkreislaufsystem 11 lediglich dadurch unterscheidet, dass durch Fluidauslässe 17, 19 aus der Förderkammer 5 austretendes Fluid durch eine Fluidwiederverwertungseinheit 70 teilweise aufgefangen und dem Fluidkreislaufsystem 11 wieder zugeführt wird. Optional kann die Fluidwiederverwertungseinheit 70 eine Fluidreinigungseinheit 72 aufweisen, durch die aus der Förderkammer 5 ausgetretenes Fluid gereinigt wird, beispielsweise von aus dem Fördergut entwichenem Gas und/oder von Staub, bevor es dem Fluidkreislaufsystem 11 zugeführt wird.

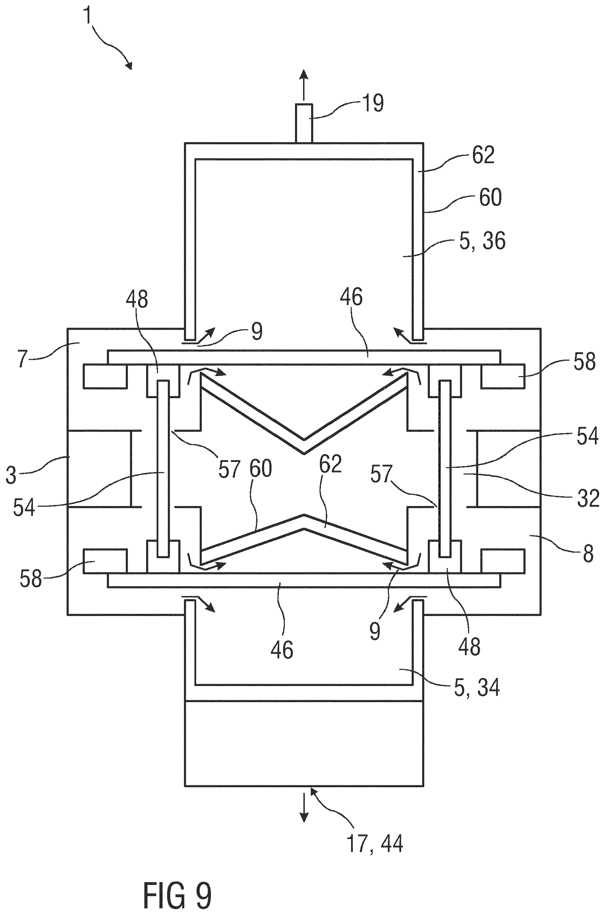

Figur 9 zeigt eine Schnittdarstellung eines vierten Ausführungsbeispiels einer Förderanlage 1. Dieses Ausführungsbeispiel unterscheidet sich von dem in den Figuren 3 und 4 gezeigten Ausführungsbeispiel im Wesentlichen nur dadurch, dass die erste Nebenkammer 6 entfällt und sich die Förderkammer 5 in einen Bereich erstreckt, der bei dem in den Figuren 3 und 4 gezeigten Ausführungsbeispiel von der ersten Nebenkammer 6 eingenommen wird. Die Zugmittel 48, die in dem in den Figuren 3 und 4 gezeigten Ausführungsbeispiel in der ersten Nebenkammer 6 angeordnet sind, sind bei dem in Figur 9 gezeigten Ausführungsbeispiel in den Nebenkammern 7, 8 angeordnet, wobei in jeder dieser Nebenkammern 7, 8 ein Zugmittel 48 angeordnet ist.

Analog zu dem in den Figuren 3 und 4 gezeigten Ausführungsbeispiel sind die Nebenkammern 7, 8 jeweils durch eine ringförmig umlaufende, schlitzartige Durchlassöffnung 9 mit der Förderkammer 5 verbunden. Durch diese Durchlassöffnungen 9 ragen die Trägerelemente 46 in die Nebenkammern 7, 8 hinein. In den Nebenkammern 7, 8 sind jeweils wiederum Führungsräder 58 angeordnet, mit denen die Trägerelemente 46 geführt werden.

Jedes Zugmittel 48 wird analog zu dem in den Figuren 3 und 4 gezeigten Ausführungsbeispiel über zwei Antriebsräder 54 angetrieben, die jeweils in einem Umlenkbereich 50, 52 des Zugmittels 48 angeordnet sind und mit dem Zugmittel 48 in Kontakt stehen. An jedem Umlenkbereich 50, 52 ist wiederum eine Zusatzkammer 31, 32 angeordnet, in der die Antriebsräder 54 dieses Umlenkbereichs 50, 52 angeordnet sind. Jede Zusatzkammer 31, 32 grenzt an beide Nebenkammern 7, 8 und weist für jedes der in ihr angeordneten Antriebsräder 54 Verbindungsöffnungen 57 auf, durch die das Antriebsrad 54 in diejenige Nebenkammer 7, 8 hineinragt, in der das mit dem Antriebsrad 54 verbundene Zugmittel 48 angeordnet ist.

Im Unterschied zu dem in den Figuren 3 und 4 gezeigten Ausführungsbeispiel begrenzen die Trägerelemente 46 nicht die Förderkammer 5, sondern sind von einer Förderkammerwand 60 der Förderkammer 5 beabstandet. Die Förderkammerwand 60 kann eine Wärmeisolationsschicht 62 aufweisen.

Durch die Verlagerung der Zugmittel 48 in die Nebenkammern 7, 8 vereinfacht sich die Konstruktion des Anlagengehäuses 3 gegenüber dem in den Figuren 3 und 4 gezeigten Ausführungsbeispiel durch den Wegfall der ersten Nebenkammer 6, die in jenem Ausführungsbeispiel eine separate Zugmittelkammer für die Zugmittel 48 bildet. Darüber hinaus vereinfacht sich die Kühlung der Zugmittel 48 bei einem Transport heißen Förderguts. Einerseits entfällt nämlich die Kühlung der ersten Nebenkammer 6. Andererseits werden die Zugmittel 48 bei einem Transport heißen Förderguts weniger stark erhitzt und müssen daher auch weniger stark gekühlt werden, da die Zugmittel 48 nun nicht mehr an einem mittleren Bereich der Trägerelemente 46 angeordnet sind, der durch das Fördergut besonders stark erhitzt wird, sondern an den kühleren Randbereichen der Trägerelemente 46 in einem deutlich größeren Abstand zu dem Fördergut.

Durch die Beabstandung der Trägerelemente 46 von der Förderkammerwand 60 bildet sich ferner oberhalb und unterhalb der Trägerelemente 46 eine weitgehend homogene Fluidatmosphäre aus, wodurch vorteilhaft insbesondere Temperaturunterschiede und turbulente Strömungen innerhalb der Förderkammer 5 reduziert werden. Die Beabstandung der Trägerelemente 46 von der Förderkammerwand 60 und eine Wärmeisolierung der Förderkammerwand 60 durch die Wärmeisolationsschicht 62 reduzieren ferner vorteilhaft die Wärmeverluste aus der Förderkammer 5, so dass bei einem Transport heißen Förderguts die Temperatur des Förderguts entlang des Förderwegs besser auf einem näherungsweisen konstanten Niveau gehalten werden kann.

Das in Figur 9 gezeigte Ausführungsbeispiel einer Förderanlage 1 kann beispielsweise dahingehend abgewandelt werden, dass die Zusatzkammern 31, 32 entfallen. Beispielsweise können die Nebenkammern 7, 8 vergrößert werden, so dass jedes Antriebsrad 54 in einer Nebenkammer 7, 8 angeordnet ist.

Ferner kann das Anlagengehäuse 3 zum Abführen von Fördergut ausgebildet sein, das beim Fördern entlang des Förderwegs von Trägerelementen 46 herunterfällt, damit die Förderkammer 5 nicht allmählich durch von Trägerelementen 46 herunterfallendes Fördergut verstopft wird. Dazu ist der Boden des oberen Bereichs der Förderkammer 5 beispielsweise wie in Figur 9 trogartig ausgebildet und gegenüber der Horizontalen geneigt, so dass von Trägerelementen 46 herunterfallendes Fördergut zu einer Entsorgungsöffnung in der Förderkammerwand 60, beispielsweise in dem Boden des oberen Bereichs der Förderkammer 5, rutschen kann und durch die Entsorgungsöffnung aus der Förderkammer 5 abgeführt werden kann. Alternativ kann der Boden des oberen Bereichs der Förderkammer 5 auch eine durchgängige Entsorgungsöffnung aufweisen, unter der beispielsweise fluiddichte Schurren angeordnet sind, über die von Trägerelementen 46 herunterfallende Fördergut entsorgt wird. Auch die in den Figuren 1 bis 4 gezeigten Anlagengehäuse 3 von Förderanlagen 1 können in ähnlicher Weise zum Abführen von Fördergut ausgebildet sein, das beim Fördern entlang des Förderwegs von Trägerelementen 46 herunterfällt.

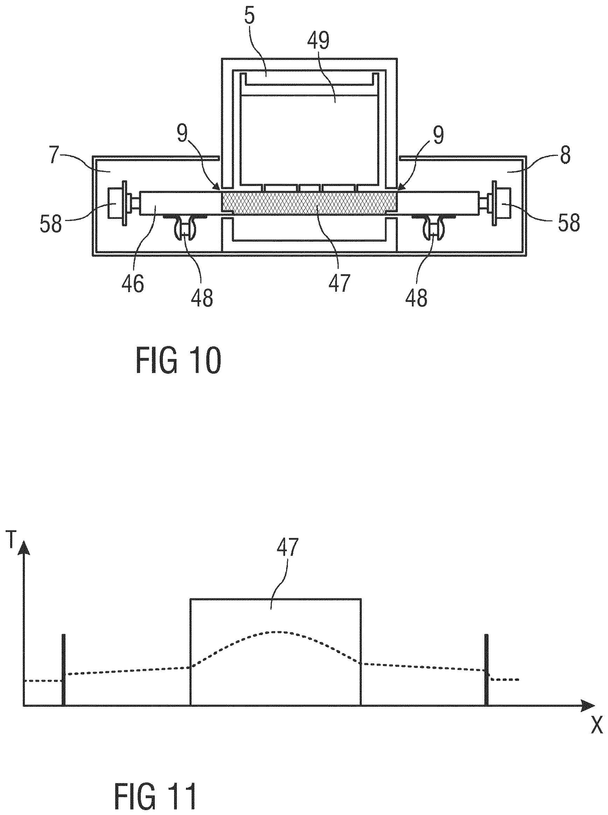

Figur 10 zeigt eine schematische Schnittansicht einer Förderanlage 1, die im Wesentlichen wie in den zuvor beschriebenen Ausführungsbeispielen ausgebildet sein kann.

Analog zu dem in den Figuren 3 und 4 gezeigten Ausführungsbeispiel sind die Nebenkammern 7, 8 jeweils durch eine ringförmig umlaufende, schlitzartige Durchlassöffnung 9 mit der Förderkammer 5 verbunden. Durch diese Durchlassöffnungen 9 ragen die Trägerelemente 46 in die Nebenkammern 7, 8 hinein. In den Nebenkammern 7, 8 sind jeweils wiederum Führungsräder 58 angeordnet, mit denen die Trägerelemente 46 geführt werden. Weiter sind Zugmittel 48 zum Antrieb der Trägerelemente 46 vorgesehen. Das Fördergut wird beispielsweise direkt durch die Trägerelemente 46 oder in an den Trägerelementen 46 angeordneten Behältern 49 transportiert.

Die Oberflächen der Trägerelemente 46 innerhalb der Förderkammer 5 und im Bereich der Durchlassöffnung 9 sind mit einem Wärmeisolationsmaterial 47 versehen.

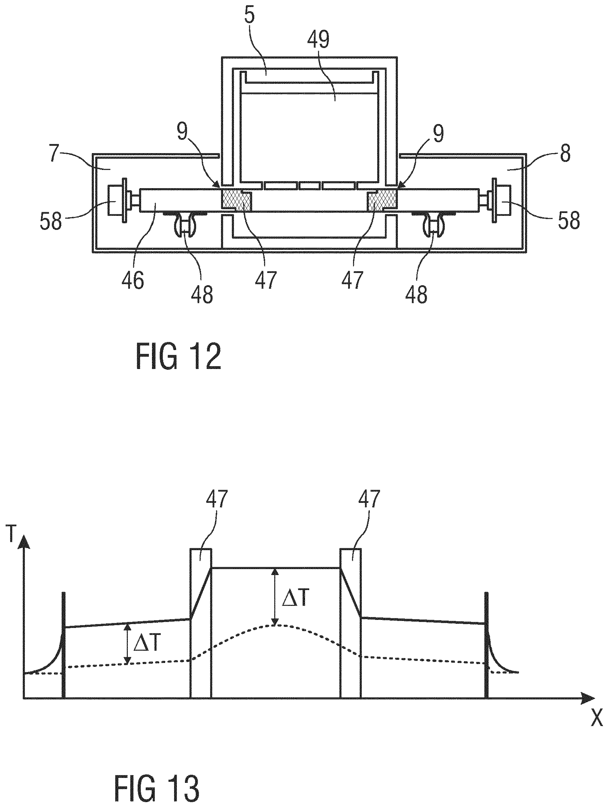

Infolge der Wärmeisolation ergibt sich ein Profil einer Temperatur T im Material des Trägerelements 46 entlang einer Hauptachse x des Trägerelements 46 wie in Figur 11 gezeigt. Figur 12 zeigt eine schematische Schnittansicht einer Förderanlage 1, die im Wesentlichen wie in den zuvor beschriebenen Ausführungsbeispielen ausgebildet sein kann.

Analog zu dem in den Figuren 3 und 4 gezeigten Ausführungsbeispiel sind die Nebenkammern 7, 8 jeweils durch eine ringförmig umlaufende, schlitzartige Durchlassöffnung 9 mit der Förderkammer 5 verbunden. Durch diese Durchlassöffnungen 9 ragen die Trägerelemente 46 in die Nebenkammern 7, 8 hinein. In den Nebenkammern 7, 8 sind jeweils wiederum Führungsräder 58 angeordnet, mit denen die Trägerelemente 46 geführt werden. Weiter sind Zugmittel 48 zum Antrieb der Trägerelemente 46 vorgesehen. Das Fördergut wird beispielsweise direkt durch die Trägerelemente 46 oder in an den Trägerelementen 46 angeordneten Behältern 49 transportiert.

Die Oberflächen der Trägerelemente 46 im Bereich der Durchlassöffnung 9 und einem daran anschließenden Bereich innerhalb der Förderkammer 5 sind mit einem Wärmeisolationsmaterial 47 versehen sein, jedoch derart, das nicht die gesamte Oberfläche der Trägerelemente 46 innerhalb der Förderkammer 5 mit dem Wärmeisolationsmaterial 47 versehen ist.

Infolge der Wärmeisolation ergibt sich ein Profil einer Temperatur T im Material des Trägerelements 46 entlang einer Hauptachse x des Trägerelements 46 wie in Figur 13 gezeigt.

Die in den Ausführungsbeispielen der Figuren 10 und 12 gezeigten, mit einem Wärmeisolationsmaterial 47 versehenen, Trägerelemente 46 sind in jedem der zuvor beschriebenen Ausführungsbeispiele einsetzbar.

Durch das verwendete Wärmeisolationsmaterial 47 auf den Oberflächen der Trägerelemente 46 wird der Wärmeeintrag in die Trägerelemente 46 aus dem heißen Fördergut reduziert, so dass auch die Wärmebelastung der Lager und Zugmittel 48 verringert wird.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 1: Förderanlage
- 3: Anlagengehäuse
- 5: Förderkammer
- 6 bis 8: Nebenkammer
- 9, 10: Durchlassöffnung
- 11: Fluidkreislaufsystem
- 13, 15: Förderkammerende
- 17 bis 19: Fluidauslass
- 21, 22: Fluideinlass
- 25: Strömungsmaschine
- 27: Wärmetauscher
- 29: Fluidzuführung
- 31, 32: Zusatzkammer
- 34, 36: Horizontalabschnitt
- 38, 40: Vertikalabschnitt
- 42: Chargiereinlass
- 44: Abwurföffnung
- 46: Trägerelement
- 47: Wärmeisolationsmaterial
- 48: Zugmittel
- 49: Behälter
- 50, 52: Umlenkbereich
- 54: Antriebsrad
- 56, 57: Verbindungsöffnung
- 58: Führungsrad
- 60: Förderkammerwand
- 62: Wärmeisolationsschicht
- 70: Fluidwiederverwertungseinheit
- 72: Fluidreinigungseinheit
- 80: Regelungssystem
- 82: Druckmessvorrichtung
- 84: Steuereinheit
- 86: Steuerventil
- T: Temperatur
- x: Hauptachse

## Patentansprüche

1. Förderanlage (1) zum Fördern eines Förderguts entlang eines Förderwegs, wobei die Förderanlage (1) eine Förderkammer (5) aufweist, die vom Förderweg durchlaufen wird, wobei zumindest außerhalb der Förderkammer (5) wenigstens eine Komponente (48, 54) einer Fördermechanik zur Förderung des Förderguts angeordnet ist, wobei die Fördermechanik einen Zugmitteltrieb mit wenigstens einem Zugmittel (48) aufweist, mit dem Trägerelemente (46) zur Förderung des Förderguts bewegbar sind, wobei die Trägerelemente (46) in der Förderkammer (5) angeordnet sind und durch wenigstens eine Durchlassöffnung (9) aus der Förderkammer (5) herausragen, **dadurch gekennzeichnet, dass** zumindest Teile der Förderanlage (1) zumindest innerhalb der Förderkammer (5) und/oder im Bereich der Durchlassöffnung (9) zumindest zum Teil mit einem Wärmeisolationsmaterial (47) versehen sind.

2. Förderanlage (1) nach Anspruch 1, **dadurch gekennzeichnet, dass** eine Trennfläche zwischen einer Oberfläche der Förderkammer (5) innerhalb der Förderkammer (5) und zumindest einer angrenzenden äußeren Oberfläche der Förderkammer (5) zumindest zum Teil mit dem Wärmeisolationsmaterial (47) versehen ist.

3. Förderanlage (1) nach Anspruch 1 oder 2, **dadurch gekennzeichnet, dass** die Oberflächen der Förderkammer (5) zumindest teilweise zu einer Umgebung hin mit dem Wärmeisolationsmaterial (47) versehen sind.

4. Förderanlage (1) nach einem der Ansprüche 1 bis 3, **dadurch gekennzeichnet, dass** Oberflächen der Trägerelemente (46) zumindest innerhalb der Förderkammer (5) und/oder im Bereich der Durchlassöffnung (9) zumindest zum Teil mit einem Wärmeisolationsmaterial (47) versehen sind und/oder dass an mindestens einem der Trägerelemente (46) mindestens ein Behälter (49) zur Aufnahme des Förderguts angeordnet ist, wobei eine Oberfläche und/oder Innenfläche des Behälters (49) zumindest zum Teil mit einem Wärmeisolationsmaterial (47) versehen ist.

5. Förderanlage (1) nach einem der vorhergehenden Ansprüche, **dadurch gekennzeichnet, dass** Oberflächen der Trägerelemente (46) außerhalb der Förderkammer (5) nicht mit einem Wärmeisolationsmaterial (47) versehen sind.

6. Förderanlage (1) nach einem der Ansprüche 1 bis 4, **dadurch gekennzeichnet, dass** Oberflächen der Trägerelemente (46) außerhalb der Förderkammer (5) zumindest teilweise mit einem Wärmeisolationsmaterial (47) versehen sind.

7. Förderanlage (1) nach einem der Ansprüche 1 bis 6, **dadurch gekennzeichnet, dass** wenigstens eine Nebenkammer (6 bis 8) vorgesehen ist, die durch die wenigstens eine Durchlassöffnung (9) mit der Förderkammer (5) verbunden ist, wobei die Trägerelemente (46) durch die wenigstens eine Durchlassöffnung (9) in die wenigstens eine Nebenkammer (6 bis 8) hineinragen und das Zugmittel in wenigstens einer der Nebenkammern (6 bis 8) angeordnet ist.

8. Förderanlage (1) nach Anspruch 7, **dadurch gekennzeichnet, dass** die Nebenkammer (6 bis 8) eine sich von einer Fluidatmosphäre in der Förderkammer (5) physikalisch und/oder chemisch unterscheidende Fluidatmosphäre aufweist.

9. Förderanlage (1) nach einem der vorhergehenden Ansprüche, **dadurch gekennzeichnet, dass** die Förderkammer (5) und/oder die Nebenkammer (6 bis 8) Teil eines Anlagengehäuses (3) sind und das Anlagengehäuse (3) wenigstens einen Fluideinlass (21, 22) und wenigstens einen Fluidauslass (17 bis 19) aufweist und bis auf den wenigstens einen Fluideinlass (21, 22) und den wenigstens einen Fluidauslass (17 bis 19) fluiddicht oder annähernd fluiddicht ausgeführt ist.

10. Förderanlage (1) nach einem der Ansprüche 7 bis 9,
**dadurch gekennzeichnet, dass** die Trägerelemente (46) die Förderkammer (5) von einer Nebenkammer (6), in der wenigstens ein Zugmittel (48) angeordnet ist, zumindest teilweise trennen.

11. Förderanlage (1) nach einem der Ansprüche 7 bis 10, **gekennzeichnet durch** eine Fluideinspeisung oder ein Fluidkreislaufsystem (11), welches wenigstens eine Nebenkammer (6 bis 8) umfasst und zur Leitung eines Fluids durch wenigstens eine Durchlassöffnung (9, 10) zwischen der Nebenkammer (6 bis 8) und der Förderkammer (5) ausgebildet ist.

12. Förderanlage (1) nach einem der Ansprüche 7 bis 10, **dadurch gekennzeichnet, dass** kein Fluidkreislaufsystem (11) vorgesehen ist.

13. Förderanlage (1) nach einem der vorhergehenden Ansprüche, **dadurch gekennzeichnet, dass** Oberflächen der Trägerelemente (46) auf deren Oberseite und deren Unterseite zumindest zum Teil mit dem Wärmeisolationsmaterial (47) versehen sind.
